# EUROPÄISCHE PATENTANMELDUNG

(11) **EP 0 831 107 A1**
(43) Veröffentlichungstag der Anmeldung: **25.03.1998**
(21) Anmeldenummer: 97116221.9
(22) Anmeldetag: 18.09.1997
(51) Int. Cl.: C08G 18/10, C08G 18/12, C08G 18/32, C08G 18/48, C09K 3/10

(54) **Wasserquellbarer Dichtstoff**

(30) Priorität: 24.09.1996 CH 2337/96
(71) Anmelder: Sika AG, vorm. Kaspar Winkler & Co., CH-8048 Zürich (CH)
(72) Erfinder: Merz, Peter W. Dr., 8832 Wollerau (CH); Schickel, Heiko, 8304 Wallisellen (CH); Onuoha, Ukiwo, 8049 Zürich (CH)
(74) Vertreter: Blum, Rudolf Emil Ernst

(57) **Zusammenfassung**

Es wird ein lagerstabiles, feuchtigkeitshärtendes Polyurethansystem beschrieben, das nach der Härtung bei Kontakt mit Wasser aufquillt. Das Polyurethansystem enthält mindestens ein hydrophiles, Isocyanatgruppen enthaltendes Bindemittel, insbesonders ein Bindemittel auf Basis Polyethylenglykol, und einen latenten Härter. Das erfindungsgemässe Abdichtungssystem kann entweder als pastöse Masse verarbeitet oder nach Vernetzung mit einer Härterkomponente, beispielsweise mit einer Wasser enthaltenden Paste, als vorgeformtes Profil von Hand verlegt werden.

## Beschreibung

### Technisches Gebiet

Die vorliegende Erfindung betrifft ein Polyurethan(PU)-System auf der Basis eines Isocyanatgruppen enthaltenden Bindemittels. Insbesonders betrifft die vorliegende Erfindung Polyurethan (PU)-Systeme, die z.B. für die Herstellung eines Eugendichtungsbandes und speziell für die Herstellung von feuchtigkeitsreaktiven, ein- oder zweikomponentigen Polyurethan-Materialien geeignet sind, welche in Kontakt mit Wasser quellen. Insbesonders betrifft die Erfindung ein PU-System auf Basis hydrophiler Bindemittel, das unter Feuchtigkeitsausschluss lagerstabile, feuchtigkeitsreaktive Klebe-, Dichtungs- und Beschichtungsmassen mit vorzüglichen Eigenschaften, d.h. keine Blasenbildungstendenz, gute Mechanik auch im mit Wasser gequollenen Zustand und gute Langzeit-Quellfähigkeit ermöglicht.

### Stand der Technik

Quellfähige Bauabdichtungssysteme sind bekannt und kommen überall dort zur Anwendung, wo Wasser oder wässrige Lösungen sicher am Durchtritt durch den Betonbaukörper gehindert werden müssen. Dabei handelt es sich einerseits um technisch bedingte Arbeitsfugen z.B. um Betonierfugen im Tunnelbau, Hochbau, Rohrbau, Brückenbau, etc. oder um Verbindungsstellen, die bei Fertigelementen zwangsläufig auftreten, und andererseits um konstruktiv geplante Arbeitsfugen, um Rissbildungen zu vermeiden, die entweder durch den bei der Verfestigung des Betons auftretenden Schwund oder durch temperaturbedingte Volumenänderungen verursacht werden. Durch die Quellung übt das expandierende Material einen Druck auf den umliegenden Beton aus und dichtet somit den Spalt. Solche Abdichtungssysteme können entweder vorgeformte Fugendichtungsbänder oder pastöse Massen sein.

Vorgeformte Profile, sogenannte Quellbänder, sind auf dem Markt eingeführt und werden hauptsächlich von japanischen Firmen vertrieben, z.B. Adeka Ultra Seal (Asahi Denka Kogyo), Hydrotite (C.I. Kasei Co.) oder Water Swebber (Dainichi). Diese im Handel erhältlichen Produkte basieren meistens auf Kautschuk, z.B. Polyethylen, Polypropylen, Ethylen/Propylen-Dien-Terpolymere (EPDM) etc. Ferner sind Quellpasten, hauptsächlich formuliert auf Acrylat Copolymer-Basis, käuflich wie z.B. Adeka Ultra Seal P-201 (Asahi Denka Kogyo), Leakmaster (C.I. Kasei Co.), Swellseal (de Neef), Sweller Seal K1 Dainichi). Diese Systeme sind chemisch nicht reaktiv und zeigen insbesondere im gequollenen Zustand eine limitierte Mechanik auf und haben eine unbefriedigende Langzeitperformance, wobei die Quellfähigkeit nach einigen Quell- bzw. Trocknungszyklen herabgesetzt wird und somit die Gefahr eines Leckes grösser wird.

Diese Abdichtungssysteme, Quellbänder bzw. Quellpasten, enthalten für die Wasseraufnahme entweder anorganische Quellmittel, wie z.B. bestimmte Tonminerale, vorzugsweise das Kalziumbentonit, oder organische Quellmittel auf der Basis von Acrylaten, wie z.B. Superabsorber bzw. Aqualic (beide von BASF), Sumika Gel oder KI Gel (beide von Kuraray Isoprene Chemical Co. Ltd. Japan), welche auch grosstechnisch, z.B. im Hygienebereich, als wasseraufnehmende Hilfsmittel insbesonders für die Herstellung von Baby-Windeln verwendet werden.

Quellbänder haben den Nachteil, dass sie zur Montage auf die Baufuge entweder mechanisch befestigt oder verklebt werden müssen, mit dem Risiko, dass grössere Unebenheiten wie z.B. Poren, Löcher, Risse etc. nicht ausgefüllt und somit auch nicht abgedichtet werden.

Es ist von Vorteil und gefordert, dass bei der Quellung keine Hydrogele gebildet werden, welche ausgewaschen werden können, wodurch die mechanischen Eigenschaften und das Quellvermögen negativ beeinflusst werden, wie z.B. bei quellfähigen Dichtungen auf Basis von Bentonit.

Neben der Lagerfähigkeit fordert die Anwendung "Abdichten eines Baukörpers mit Langzeitbeanspruchung" eine Langzeitbeständigkeit des Abdichtungssystems. Die Konsistenz des Materials und dessen mechanischen Eigenschaften sowie vor allem auch die Quellfähigkeit sollten auch nach mehreren Quell- und Trocknungszyklen über viele Jahre erhalten bleiben. Eine gute hydrolytische Beständigkeit auch bei warm-feuchten Bedingungen ist erwünscht.

Ferner sollte das Quellverhalten so eingestellt werden, dass ein Aufquellen des Dichtungsmaterials erst dann auftritt, wenn Wasser auf dieses Material über eine bestimmte Zeit, beispielsweise über eine Zeitdauer von 24 Stunden und länger einwirkt. Durch diese Quellverzögerung ist sichergestellt, dass das Material bei der Lagerung auf der Baustelle oder bei der Verarbeitung bei Berührung mit Wasser (z.B. durch Regen) nicht sofort aufquillt. Ferner ist ein zu schnelles Expandieren im noch frischen Beton unerwünscht, da dadurch der Zwischenraum zwischen dem "alten" (d.h. gehärteten Beton) und "neuen" (d.h. noch nicht verfestigten Beton) vergrössert wird.

Die Abdichtungssysteme gemäss Stand der Technik bestehen üblicherweise aus einem nicht-hydrophilen und nicht mit Wasser quellbaren Thermoplasten und einem Quellmittel.

In Patentdokumenten sind beispielsweise Fugendichtungsbänder auf der Basis von Kautschuk beschrieben, z.B. in EP 0219296 B1, EP 0501004 A1, EP 0588286 A1, DE 4323216 A1 etc. , Injektionsmaterialien auf der Basis von Polyacrylaten z.B. in EP 0177289 B1 oder DE 4226198 A1, und Dichtungssysteme auf der Basis von Polyurethanen z.B. in DE 4039151 A1, DE 4124338 A1 oder DE 4211302 A1.

Die Verwendung von Polyethylenglykolen für die Erzeugung von hydrophilen Eigenschaften ist bekannt.

Die oben erwähnten Injektionsmaterialien und Dichtungssysteme sind zweikomponentig. Alle diese Systeme enthalten ein Quellmittel in der Härterkomponente.

Diese Systeme des Stands der Technik sind für die Formulierung von einkomponentig verwendbaren Systemen, beispielsweise mangels Lagerstabilität, ungeeignet.

### Zusammenfassung der Erfindung

Die vorliegende Erfindung hat zum Ziel, lagerstabile, einkomponentig verwendbare Kleb- bzw. Dichtstoffe auf der Basis von Isocyanatgruppen enthaltenden Polyurethanprepolymeren bereitzustellen, die unter Einwirkung von Umgebungsfeuchte oder durch Zugabe einer Härterkomponente bzw. Wasserpaste vernetzen, in Kontakt mit Wasser quellen und gute mechanische Stabilität aufweisen. Die erfindungsgemässen PU-Quellmassen enthalten einen latenten Härter und vorzugsweise nur hydrophile, nicht Hydrogele bildende Bestandteile, die nicht durch fliessendes Wasser ausgewaschen und erodiert werden können. Dadurch wird eine Versprödung und eine Zerstörung des Abdichtungssystems durch die Bewegung des Baukörpers unterbunden, und die mechanische Festigkeit bleibt auch im gequollenen Zustand über einen langen Zeitraum gewahrt.

Die erfindungsgemässen PU-Abdichtungsmassen enthalten ein hydrophiles Isocyanatgruppen enthaltendes Bindemittel auf Basis von Polyethylenglykol und einen latenten Härter, welcher auch bei direktem Kontakt mit Wasser eine absolut blasenfreie Härtung der Isocyanatgruppen garantiert und somit eine ausgezeichnete Materialcharakteristik bzw. Kompaktheit liefert.

Zusätzlich können die erfindungsgemässen Systeme einen oder mehrere Quellfüllstoffe enthalten. Solche Quellfüllstoffe sind bekannt. Da die Kombination eines hydrophilen PU-Prepolymers mit hydrophilen Weichmachern schon ein gewisses Quellvermögen besitzt, ist der Zusatz von Quellmitteln für viele Anwendungen fakultativ. Jedoch können solche Quellmittel in kleinen Mengen abhängig von der anwendungsspezifisch geforderten Quellgeschwindigkeit und dem Quellvermögen eingesetzt werden. Diese Quellfüllstoffe müssen intensiv getrocknet werden, und es hat sich gezeigt, dass es mit einem hohen Anteil des Quellfüllstoffes schwierig ist, lagerstabile PU-Systeme zu formulieren. Infolge der Verwendung eines hydrophilen Bindemittels ist mit den erfindungsgemässen Systemen durch Zusatz geringer Mengen Quellmittel eine überraschende Erhöhung der Quellgeschwindigkeit und des Quellvolumens zu erhalten.

### Kurze Beschreibung der Figuren

Figur 1 ist eine graphische Darstellung der Quellgeschwindigkeit, und
Figur 2 ist eine graphische Darstellung des Abbaus der Härte Shore A nach 7 Quell-/Trockenzyklen.

### Ausführliche Beschreibung der Erfindung

Das erfindungsgemässe wasserquellbare und lagerstabile feuchtigkeitsreaktive PU-System enthält oder besteht aus einem hydrophilen Bindemittel und einem latenten Härter. Das als Hauptkomponente vorliegende Bindemittel ist das hydrophile Reaktionsprodukt von Isocyanatgruppen enthaltenden Substanzen mit irgendeiner mit Isocyanatgruppen reaktiven Verbindung. Die Umsetzung kann in bekannter Weise unter Inertgasatmosphäre bei Temperaturen um 80 °C und gegebenenfalls in Gegenwart eines Katalysators und meistens stöchiometrisch, d.h. pro H-aktive Gruppe ein Isocyanatgruppen enthaltendes Monomer, erfolgen. Der Isocyanatgehalt im Prepolymer liegt üblicherweise im Bereich von 0.2 bis 10 Gew.-%, vorzugsweise von 1 bis 3 Gew.-%.

In einer bevorzugten Ausführungsform ist das Polyol von hydrophiler Natur, und es ist bevorzugt ein Polyethylenglykol mit einem Molekulargewicht von mindestens 400, vorzugsweise im Bereich von etwa 1000 und 4000. Gegebenenfalls können weitere Polyole bei der Prepolymerherstellung zugesetzt werden, wobei solche in Betracht kommen, die mit Polyethylenglykol verträglich sind, wie z.B. Polypropylenglykol, das mit mindestens einer Ethylenoxideinheit terminiert ist.

Bindemittel auf der Basis von Polyethylenglykolen mit Molekulargewichten ab ca. 1000 zeigen neben der Hydrophilie auch ausgeprägte Quelleigenschaften, so dass entsprechende PU-Systeme ohne oder mit sehr geringem Quellmittelgehalt und trotzdem hohem Quellvermögen formuliert werden können.

Das bevorzugte Isocyanatgruppen terminierte Prepolymer auf der Basis von Polyethylenglykol ist bei Raumtemperatur halbfest (semi-solid) und wird bei Temperaturen oberhalb von ca. 50 °C flüssig. Vor der Umsetzung mit einem Isocyanatgruppen enthaltenden Monomer, wie z.B. 1-Isocyanato-3,3,5-trimethyl-5-isocyanatomethylcyclohexan (Isophorondiisocyanat), 4,4'-Diphenylmethandiisocyanat, Hexamethylen-diisocyanat, Perhydro-2,4'-und -4,4'-diphenylmethandiisocyanat, 2,4-und 2,6-Toluol-diisocyanat etc., sollte das Polyethylenglykol möglichst trocken vorliegen, um beste Lagerstabilität des erfindungsgemässen PU-Abdichtungssystems zu erzielen. Die Trocknung kann entweder mit Hilfe einer effizienten Evakuierung bei erhöhter Temperatur oder mit einer spezifischen Menge feuchtigkeitsreaktiver Verbindung, beispielsweise einem monofunktionellen Isocyanat, erfolgen.

Die Begriffe "hydrophiles Bindemittel" und "hydrophile Bindemittel" sind als identisch und als ein hydrophiles Bindemittel resp. eine Kombination hydrophiler Bindemittel einschliessend anzusehen.

Um optimale mechanische Eigenschaften auch im gequollenen Zustand zu erreichen, ist die Verwendung von latenten Härtern, wie z.B. Aldimine, Ketimine oder Oxazolidine, wesentlich, da einerseits bei der Härtung nur kleinere Mengen von Kohlendioxid freigesetzt werden, die somit nicht zu Blasenbildungen führen, und andererseits verbessern die dabei freigesetzten Aminogruppen aufgrund ihrer Funktionalität von mehr als zwei die Mechanik und die Haftung.

Der Härter wird üblicherweise in solchen Mengen verwendet, dass die reaktiven Gruppen des Härters in einer Equivalentmenge von 10 bis 100 % bezogen auf die Isocynatgruppen des Prepolymers vorhanden sind, vorzugsweise in einer Menge von 40 bis 90 % und speziell bevorzugt in einer Menge von 50 bis 80 %. Solche Mengen stellen das blasenfreie Härten der PU-Zusammensetzungen mittels eines optimierten Verhältnis des Isocyanat/Amin-Härtung zur Isocyanat/ Feuchtigkeits-Härtung sicher. Speziell geeignet für die Systeme der vorliegenden Erfindung sind aromatische Dialdimin-Härter.

Ebenfalls können durch Zugabe geringer Anteile von Vernetzern, wie beispielsweise trimerisierte Isocyanatgruppen enthaltenden Verbindungen, insbesondere das Biuret von Hexamethylendiisocyanat, die mechanischen Eigenschaften zusätzlich verbessert werden, da dadurch der Vernetzungsgrad der Matrix erhöht wird.

Zu den erfindungsgemässen Abdichtungssystemen können weitere Komponenten zugemengt werden und zwar:
- anorganische Quellmittel, wie z.B. Tonmineralien etc.;
- organische Quellmittel, wie z.B. Copolymere bestehend aus Maleinsäureanhydrid und Isobutylen, Copolymere bestehend aus einem Gemisch von Acrylatgruppen enthaltenden Monomeren, Copolymere bestehend aus Polyvinyl und Acrylatgruppen enthaltenden Verbindungen etc.,
- Weichmacher, wie z.B. solche aus der Gruppe bestehend aus Phthalaten, wie Dibutyl-, Dioctyl-, Dioctylhexyl-, Diisooctyl-, Diisodecyl-, Dibenzyl- oder Butylbenzylphthalat; Phosphaten mit bis zu 8 C-Atomen im Alkylrest, wie Trioctylphosphat; epoxyhaltige Weichmacher; Alkylphenylsulfonsäureester, wie Toluolsulfonamid; Polyetherbenzoate, insbesondere Polyglykoldibenzoate, wie Dipropylenglykoldibenzoat, Diethylenglykoldibenzoat etc.;
- Katalysatoren, wie z.B. metallorganische Katalysatoren insbesondere Dibutylzinndilaurat etc., tertiäre Amine, wie z.B. Dimorpholinodiethylether etc., Carbonsäuren, wie z.B. Laurinsäure, Salicylsäure etc., Anhydride, wie z.B. Methylhexahydrophthalsäureanhydrid etc.;
- Haftvermittler, wie z.B. Alkoxysilylgruppen enthaltende Verbindungen mit aktiven Wasserstoff enthaltenden Gruppen, insbesondere z.B. Mercaptopropyltrimethoxysilan, Glycidylpropyltrimethoxysilan, Aminopropyltrimethoxysilan, Methylaminopropyltrimethoxysilan, Amino-Bis(propyltrimethoxysilan) etc.,
- und weitere Additive, wie z.B. Stabilisatoren, Thixotropiermittel, Pigmente, Fungizide, Korrosionsschutzmittel, Trocknungsmittel etc., um anwendungsspezifischen Anforderungen zu genügen oder die Qualität des PU-Aödichtungssystems anzuheben. Solche Anpassungen sind dem Fachmann bekannt. Es ist festzuhalten, dass Haftvermittler (vgl. oben) auch als Stabilisatoren wirken können.

Komponenten, insbesondere die Quellmittel, welche zu polaren Gruppen wie z.B. Carbonsäuregruppen, Hydroxygruppen etc. hydrolysieren können, sind von Vorteil, da dadurch das Quellvermögen dank der Bildung von Wasserstoffbrücken stark begünstigt wird.

Die erfindungsgemässen PU-Systeme weisen üblicherweise die nachfolgend aufgeführte Zusammensetzung auf:
A) 30 bis 90 Gew.-%, insbesondere 50 bis 70 Gew.-%, mindestens eines hydrophilen Prepolymers,
B) 0.1 bis 8 Gew.-% mindestens eines latenten Härters,
C) 0 bis 8 Gew.-% mindestens eines Isocyanatgruppen enthaltenden Vernetzers,
D) 0 bis 30 Gew.-% mindestens eines hydrophilen Weichmachers,
E) 0 bis 50 Gew.-%, insbesondere 0.5 bis 5 Gew.-%, mindestens eines Quellmittels,
F) 0 bis 2 Gew.-% mindestens einer Carbonsäure bzw. eines Carbonsäureanhydrids,
G) 0 bis 2 Gew.-% mindestens einer Silangruppen enthaltenden Verbindung,
H) 0 bis 5 Gew.-% mindestens eines Thixotropiermittels,
I) 0 bis 40 Gew.-%, insbesondere 10 bis 25 Gew.-%, mindestens eines Füllstoffes,
K) 0 bis 1 Gew.-% eines metallorganischen Katalysators.

Die erfindungsgemässen feuchtigkeitsreaktiven PU-Abdichtungsmassen sind lagerstabil und können unter Feuchtigkeitsabschluss z.B. in Kartuschen, Fass etc. abgefüllt werden, um nachher auf der Baustelle mittels einer Auspressvorrichtung in pastöser Form appliziert zu werden.

Ausserdem können sie durch Vermischen mit einer Härterkomponente auf der Basis von Amingruppen-, Alkoholgruppen- oder Schwefelgruppen-enthaltenden Verbindungen resp. einer Wasser enthaltenden Faste vernetzt werden, um vorprofilierte Fugenbänder, resp. Quellprofile zu realisieren.

Die erfindungsgemässen Abdichtungssysteme finden Verwendung nicht nur im Baubereich, sondern auch in anderen Marktsegmenten, grundsätzlich überall dort, wo ein Objekt durch die Expansion eines mit Wasser in Kontakt tretenden Quellmaterials abgedichtet werden muss.

Die folgenden Ausführungen am Beispiel 1-Komponenten(1K)-Baudichtstoff, Quellpaste, sollen die Erfindung weiter veranschaulichen. Diese sind in keiner Weise als den Umfang der Erfindung in irgendeiner Form beschränkend anzusehen.

### Beispiele

| **Rohmaterialien, die in den Beispielen verwendet wurden:** | **Bezogen von:** |
|---|---|
| | |
| TDI (Tolylendiisocyanat, Isomerengemisch 80/20): | Bayer, DE |
| Desmodur N100 (Trimer von Hexamethylendiisocyanat): | Bayer, DE |
| PEG 2000 (Polyethylenglykol mit MG um 2000) | Bayer, DE |
| | |
| Silan A187 (Epoxypropyltrimethoxysilan): | Union Carbide, USA |
| Mesamoll (Toluolsulfonamid) | Bayer, DE |
| | |
| Dibutylzinndilaurat (Katalysator): | Air Products |
| Laurinsäure (Katalysator): | Bayer, DE |
| Bayer OZ (aliphatischer, latenter Härter) | Bayer, DE |
| *Latenter Härter BJ (aromatisches Dialdimin) | |
| | |
| **Stabileze QM (Quellmittel / Copolymer bestehend aus Methylvinylether/ Maleinsäureanhydrid und 1,9-Decadiene): | ISP Inc., USA |
| Cab-O-Sil TS720 (Rheologieadditiv auf Kieselsäurebasis): | Cabot Corp., USA |
| **Bayferrox (Eisenoxid-Pigmente): | Bayer, DE |
| **Kreide (Calciumcarbonat): | Omya, DE |
| | |
| Leakmaster (Quellpaste): | C.I.Kasei, Japan |
| Swellseal (Quellpaste): | DeNeef, NL |

| | |
|---|---|
| * Die Herstellung erfolgte gemäss EP 0469751 A1 bei einer Temperatur um 110°C, aber ohne Katalysator, aus Benzaldehyd und Polyethylenglykoldiamin. | |
| ** Die Füllstoffe wurden bei 100°C, während 48 Stunden getrocknet. | |

### Bemerkungen:

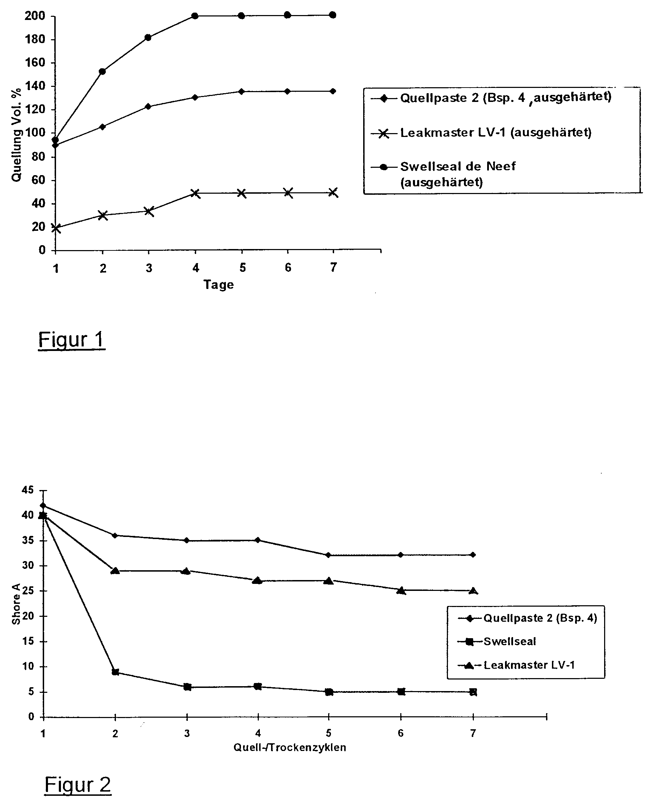

Das Quellverhalten und andere Eigenschaften der unten beschriebenen Quellsysteme sind in den Tabellen 1 und 2, sowie in den Diagrammen der Figuren 1 und 2 aufgeführt.

Die Verwendung der teureren Weichmacher Dipropylenglykolbenzoat bzw. Diethylenglykolbenzoat anstelle von Mesamoll begünstigt die Lagerstabilität.

### Beispiel 1: Zubereitung des hydrophilen Prepolymers:

Das TDI-Prepolymer wurde durch Reaktion eines Polyolgemisches und TDI (80/20) hergestellt. 5050 g eines Polypropylenetherpolyols (mittleres Molekulargewicht von 4000, Hydroxylzahl von 34.4, Wassergehalt von 0.03 Gew.-%) und 3800 g PEG 2000S (Hydroxylzahl von 57, Wassergehalt von 0.3 Gew.-%) wurden in einen Reaktionskolben mit 1355 g TDI gegeben.

Die Prepolymersynthesereaktion wurde ohne Katalysator durchgeführt. Nach 7 Stunden Rühren unter Stickstoff bei 80°C wurde ein Endisocyanatgehalt von 3% und eine Viskosität von 80 Pa.s bei 25°C erhalten.

### Beispiel 2: Zubereitung eines Prepolymers ohne PEG 2000S:

2000 g eines Polypropylenetherpolyols (mittleres Molekulargewicht von 4000, Hydroxylzahl von 34.4, Wassergehalt von 0.03 Gew.-%) wurden in einen Reaktionskolben mit 271 g TDI gegeben.

Die Prepolymersynthesereaktion wurde ohne Katalysator durchgeführt. Nach 8 Stunden Rühren unter Stickstoff bei 80°C wurde ein Endisocyanatgehalt von 3 % und eine Viskosität von 8 Pa.s bei 25°C erhalten.

### Beispiel 3: Zubereitung einer erfindungsgemässen Quellpaste (ohne Quellmittel und mit latentem Härter BJ) => Quellpaste 1

600 g des hydrophilen Prepolymers (Beispiel 1) wurden unter Vakuum mit 200 g Mesamoll, 60 g Cab-O-Sil TS 720, 250 g Kreide, 15 g Bayferrox-schwarz, 0.5 g Silan A187, 70 g Desmodur N100, 0.5 g Laurinsäure und 76.0 g Härter BJ zu einer feinen Paste verarbeitet.

Diese Paste zeigte eine gute Standfestigkeit, eine Hautbildungszeit von 40 Minuten bei RT , war nach 2 Wochen Lagerung bei 60°C gut verarbeitbar und härtete blasenfrei aus.

### Beispiel 4: Zubereitung einer erfindungsgemässen Quellpaste (mit Quellmittel und mit latentem Härter BJ) => Quellpaste 2

Die Zubereitung erfolgte analog zum Beispiel 3, wobei zusätzlich 10 g Stabileze QM zugemischt wurden.

Diese Paste zeigte eine gute Standfestigkeit, eine Hautbildungszeit von einer Stunde bei RT, war nach 2 Wochen Lagerung bei 60°C gut verarbeitbar und härtete blasenfrei aus.

### Beispiel 5: Zubereitung eines erfindungsgemässen Quellprofils

Die erfindungsgemässe Quellpaste 2 (Beispiel 4) wurde mit einer Wasserpaste (bestehend aus 90 Gew.-% Wasser und 10 Gew.-% Verdickungsmittel) vermischt und zu einem Profil appliziert. Das Profil war innerhalb von 2 Stunden ausgehärtet und konnte ohne Schwierigkeiten verlegt werden.

### Beispiel 6: Zubereitung einer Quellpaste (ohne Quellmittel und ohne latenten Härter)=> Quellpaste 3

600 g des hydrophilen Prepolymers (Beispiel 1) wurden unter Vakuum mit 200 g Mesamoll, 60 g Cab-O-Sil TS 720, 250 g Kreide, 15 g Bayferrox-schwarz, 0.5 g Silan A187, 70 g Desmodur N100, und 0.5 g Dibutylzinndilaurat zu einer feinen Paste verarbeitet.

Diese Paste zeigte eine gute Standfestigkeit, eine Hautbildungszeit von 3 Stunden bei RT und war nach einer Woche Lagerung bei 60°C gut verarbeitbar. Nach Aushärtung der Quellpaste unter hoher Luftfeuchtigkeit zeigte die Probe eine hohe Blasenbildungstendenz.

### Beispiel 7: Zubereitung einer Quellpaste (mit Quellmittel und ohne latenten Härter BJ) => Quellpaste 4

Die Zubereitung erfolgte analog zur Quellpaste 3 (Beispiel 6), wobei zusätzlich 10 g Stabileze QM zugemischt wurden.

Diese Paste zeigte eine gute Standfestigkeit, eine Hautbildungszeit von 3.5 Stunden bei RT und war nach einer Woche Lagerung bei 60°C mässig verarbeitbar. Nach Aushärtung der Quellpaste unter hoher Luftfeuchtigkeit zeigte die Probe eine hohe Blasenbildungstendenz.

### Beispiel 8: Zubereitung einer Quellpaste (ohne PEG 2000S) => Quellpaste 5

Die Zubereitung erfolgte analog zur Quellpaste 2 (Beispiel 4), wobei anstelle des hydrophilen TDI-Prepolymers (Beispiel 1) das TDI-Prepolymer gemäss Beispiel 2 verwendet wurde.

Diese Paste zeigte eine gute Standfestigkeit, eine Hautbildungszeit von 1.5 Stunden bei RT, war nach 2 Wochen Lagerung bei 60°C gut verarbeitbar und härtete blasenfrei aus; zeigte jedoch eine ungenügende Quellung im Wasser.

### Beispiel 9: Zubereitung einer Quellpaste mit Bayer OZ: (mit aliphatischem latentem Härter) => Quellpaste 6

Die Zubereitung erfolgte analog zur Quellpaste 2 (Beispiel 4), wobei anstelle des aromatischen Härters BJ 73.2 g Bayer OZ verwendet wurde.

Diese Paste zeigte eine gute Standfestigkeit, eine Hautbildungszeit von 0.5 Stunde bei RT und war nach 3 Tagen Lagerung bei 60°C durchgehärtet. Die ausgehärtete Masse war blasenfrei.

Im Handel käufliche Quellpasten:
- Leakmaster LV-1 (C.I. Kasei Co.): : => Quellpaste 7
- Swellseal (de Neef): : => Quellpaste 8

| **Vergleich der Eigenschaften: (Tabellen 1 und 2)** | | | | | | |
|---|---|---|---|---|---|---|
| **Bezeichnung** | **Basis** | **Standfestigkeit** | **Hautbildungszeit [Std.]** | **Blasenbildung** | **lagerstabil bei 60°C [Tage]** | **Mechanik nach 7 Quell- u. Trockenzyklen** |
| | | | | | | |
| **Quellpaste 1** | **PEG/BJ** | **i.o.** | **0.7** | **nein** | **>14** | **gut** |
| **Quellpaste 2** | **PEG/BJ/QM** | **i.o.** | **1** | **nein** | **>14** | **gut** |
| **Quellprofil** | **PEG/BJ/QM** | **na.** | **na.** | **nein** | **n.a.** | **gut** |
| | | | | | | |
| **Quellpaste 3** | **PEG** | **i.o.** | 3 | ja,stark | 7 | schlecht |
| **Quellpaste 4** | **PEG/QM** | **i.o.** | 3.5 | ja,stark | 7 | schlecht |
| | | | | | | |
| **Quellpaste 5** | **QM/BJ** | **i.o.** | **1.5** | **nein** | **>14** | **gut** |
| **Quellpaste 6** | **PEG/OZ/QM** | **i.o.** | **0.5** | **nein** | 3 !! | **gut** |
| | | | | | | |
| **Quellpaste 7** | **Leakmaster** | **i.o.** | 5 | ja,stark | 7 | **gut** |
| **Quellpaste 8** | **Swellseal** | **i.o.** | 3 | ja,stark | 7 | schlecht |
| | | | | | | |

| **Bezeichnung** | **Basis** | **Härte Shore A** | | | **Quellvolumen [%]** | |
|---|---|---|---|---|---|---|
| | | **7 d RT** | **1 d H2O** | **7 d H2O** | **nach 1 d** | **nach 7 d** |
| | | | | | | |
| **Quellpaste 1** | **PEG/BJ** | **40** | **35** | **30** | **16** | **40** |
| **Quellpaste 2** | **PEG/BJ/QM** | **43** | **39** | **37** | **90** | **135** |
| **Quellprofil** | **PEG/BJ/QM** | **41** | **38** | **35** | **45** | **108** |
| | | | | | | |
| **Quellpaste 3** | **PEG** | 42 | 15 | 5 | **23** | **41** |
| **Quellpaste 4** | **PEG/QM** | 45 | 20 | 7 | **28** | **52** |
| | | | | | | |
| **Quellpaste 5** | **QM/BJ** | **45** | **41** | **40** | 5 | 9 |
| **Quellpaste 6** | **PEG/OZ/QM** | **47** | **42** | **40** | **95** | **138** |
| | | | | | | |
| **Quellpaste 7** | **Leakmaster** | **40** | **28** | **22** | **19** | **48** |
| **Quellpaste 8** | **Swellseal** | 40 | 9 | 5 | **95** | **200** |
| **d = Tage** **i.o. = in Ordnung** **n.a. = nicht anwendbar** | | | | | | |

Diskussion: (Gute Eigenschaften sind fett markiert.)
- Aliphatische Härter (z.B. Bayer OZ) ergeben weniger lagerstabile Quellpasten als aromatische latente Härter (z.B. Härter BJ) => vergleiche die Quellpaste 2 mit 6.
- Ohne das hydrophile PEG-TDI-Prepolymer ist das Quellvermögen herabgesetzt => vergleiche die Quellpaste 2 mit 5.
- Quellpasten, die ohne latenten Härter formuliert sind, zeigen eine schlechte Alterungsbeständigkeit und neigen zu Blasenbildungen während der Härtung => vergleiche die Quellpasten 1 bzw. 2 mit 3 bzw. 4.
- Die käuflichen Quellpasten (Leakmaster / Swellseal) zeigen ein beschränktes Eigenschaftsprofil auf.
- Der Vergleich der Quellpasten 1 und 4 mit Quellpaste 2 (enthaltend Härter + Quellmittel) zeigt eine überraschend hohe Quellgeschwindigkeit und ein stark erhöhtes Quellvolumen.

## Patentansprüche

1. Polyurethan (PU)-System enthaltend mindestens ein hydrophiles Isocyanatgruppen enthaltendes Prepolymer und mindestens einen latenten Härter.

2. PU-System gemäss Anspruch 1, dadurch gekennzeichnet, dass das Prepolymer das Reaktionsprodukt aus mindestens einem Isocyanatgruppen enthaltenden Monomer und mindestens einem Polyol ist und der Isocyanatgehalt bezogen auf das Prepolymer zwischen 0.2 bis 10 Gew.-%, insbesondere zwischen 1 und 3 Gew.-%, beträgt.

3. PU-System gemäss Anspruch 2, dadurch gekennzeichnet, dass das Polyol Polyethylenglykol mit einem Molekulargewicht von mindestens 400, insbesondere von zwischen 1000 und 4000, ist.

4. PU-System gemäss Anspruch 2, dadurch gekennzeichnet, dass das Polyol Polyethylenglykol in Mischung mit mindestens einem weiteren Polyol, insbesonders Polypropylenglykolen, speziell bevorzugt Polypropylenglykolen, die mit mindestens einer Ethylenoxidgruppierung terminiert sind, ist und dass das Polyethylenglykol ein Molekulargewicht von mindestens 400, insbesondere von zwischen 1000 und 4000, besitzt.

5. PU-System gemäss einem der Ansprüche 1 bis 4, dadurch gekennzeichnet, dass der latente Härter ein aromatisches Dialdimin ist.

6. PU-System gemäss einem der Ansprüche 1 bis 5, dadurch gekennzeichnet, dass das PU-System den mindestens einen latenten Härter in einer Equivalentmenge von 10 bis 100 %, insbesonders 40 bis 90 %, speziell bevorzugt 50 bis 80 % enthält.

7. PU-System gemäss einem der Ansprüche 1 bis 6, dadurch gekennzeichnet, dass es das mindestens eine hydrophile Prepolymer in einer Menge von 30 bis 90 Gew.-%, insbesonders 50 bis 70 Gew.-% enthält.

8. PU-System gemäss einem der Ansprüche 1 bis 7, dadurch gekennzeichnet, dass es zusätzlich mindestens eine Komponente ausgewählt aus der Gruppe umfassend Isocyanatgruppen enthaltende Vernetzer in einer Menge von bis zu 8 Gew.-%, hydrophile Weichmacher in einer Menge von bis zu 30 Gew.-%, Quellmittel in einer Menge von bis zu 50 Gew.-%, insbesondere 0.5 bis 5 Gew.-%, Carbonsäuren bzw. Carbonsäureanhydride in einer Menge von bis zu 2 Gew.-%, Silangruppen enthaltende Verbindungen in einer Menge von bis zu 2 Gew.-%, Thixotropiermittel in einer Menge von bis zu 5 Gew.-%, Füllstoffe in einer Menge von bis zu 40 Gew.-%, insbesonders 10 bis 25 Gew.-%, und metallorganische Katalysatoren in einer Menge von bis zu 1 Gew.-%.

9. PU-System gemäss einem der Ansprüche 1 bis 8, dadurch gekennzeichnet, dass der Weichmacher ein Polyetherbenzoat ist

10. Verwendung eines PU-Systems gemäss einem der Ansprüche 1 bis 9, zusammen mit einer Härterkomponente zur Herstellung von vorgeformten Quellprofilen.
